# EUROPEAN PATENT APPLICATION

(11) **EP 4 797 659 A1**
(43) Date of publication of application: **26.08.2026**
(21) Application number: 24881174.7
(22) Date of filing: 09.08.2024
(51) Int. Cl.: H04L 67/12

(54) **EDGE COMPUTING-BASED INTELLIGENT MULTI-NODE ONLINE MONITORING METHOD AND SYSTEM**

(30) Priority: 26.10.2023 CN 202311401152
(71) Applicant: Yunnan Power Grid Co., Ltd. Transmission Branch, Yunnan 650102 (CN); Yunnan Electric Power Test and Research Institute (Group) Co., Ltd, Kunming, Yunnan 650214 (CN)
(72) Inventor: WANG, Hongwu, Kunming, Yunnan 650102 (CN); ZHANG, Wenfeng, Kunming, Yunnan 650102 (CN); LIU, Shuai, Kunming, Yunnan 650102 (CN); WU, Zengming, Kunming, Yunnan 650102 (CN); YANG, Teng, Kunming, Yunnan 650102 (CN); YANG, Yi, Kunming, Yunnan 650102 (CN); LUO, Gang, Kunming, Yunnan 650102 (CN); JIN, Jing, Kunming, Yunnan 650102 (CN); LI, Junpeng, Kunming, Yunnan 650102 (CN); ZHANG, Jiwei, Kunming, Yunnan 650102 (CN); ZHE, Meilin, Kunming, Yunnan 650102 (CN); LUO, Zhexuan, Kunming, Yunnan 650102 (CN)
(74) Representative: Osterhoff, Utz
(86) International application number: PCT/CN2024/110900
(87) International publication number: WO 2025/086805

(57) **Abstract**

The present application relates to the technical field of node online monitoring, and in particular to an edge computing-based intelligent multi-node online monitoring method and a system. The monitoring method includes: acquiring network node data through a sensor; performing data processing and analysis on acquired data based on an edge computing method; and performing online monitoring of intelligent nodes through a principle of magnetic induction. The present application can accurately and stably acquire network node data through an efficient sensor data acquisition module. By adopting edge computing technology, the present application reduces data transmission delay and improves the real-time performance of monitoring. By adopting the principle of magnetic induction, accurate monitoring of node states is realized in the intelligent node online monitoring module. Through the comprehensive application of the sensor data acquisition module, the edge computing and data processing and analysis module, and the intelligent node online monitoring module, the collaborative intelligent online monitoring of multi-nodes is realized.

## Description

### TECHNICAL FIELD

The present application relates to the technical field of node online monitoring, and in particular to an edge computing-based intelligent multi-node online monitoring method and an edge computing-based intelligent multi-node online monitoring system.

### BACKGROUND

Domestic and overseas monitoring technologies for transmission lines focus on icing of transmission lines, tower tilt, insulator pollution, temperature monitoring of transmission lines and other aspects. However, various monitoring devices have data format and background processing redundancy, resulting in cumbersome and complex monitoring data fusion processes and difficult online monitoring operation and maintenance. Therefore, higher requirements are put forward for the data processing and transmission capabilities of the data conversion system.

As an emerging technology, edge computing is still in its infancy globally. With the continuous in-depth development of the Internet of Things in various industries, edge computing has gradually carried out pilot research in many fields with large and dispersed data volume and high real-time response requirements, and the achievements have been widely recognized by the industry, and have also attracted increasing attention from the Internet of Things industry. At present, there is no unified definition of the concept of edge computing, but a generally accepted view in the industry is that edge computing is a platform that provides nearby intelligent services on the network edge side close to terminal equipment or terminal data sources. The platform integrates core capabilities such as network, computing, storage and application, and can meet the digitalization needs of various Internet of Things industries, including key needs such as security and privacy protection, real-time business processing, and intelligent applications.

### SUMMARY

In view of the above problems, the present application is provided.

Therefore, the present application provides an edge computing-based intelligent multi-node online monitoring method. Through an efficient sensor data acquisition module, the network node data can be accurately and stably acquired; by adopting edge computing technology, the present application reduces data transmission delay and improves the real-time performance of monitoring.

To solve the above technical problems, the present application provides the following technical solution: an edge computing-based intelligent multi-node online monitoring method, including the following steps:
acquiring network node data through a sensor;
performing data processing and analysis on acquired data based on an edge computing method; and
performing online monitoring of intelligent nodes through a principle of magnetic induction.

As a preferred embodiment of the edge computing-based intelligent multi-node online monitoring method of the present application, the acquiring network node data through the sensor is implemented by reading sensor data (SD) from a tail node M of a power line and establishing communication with a node M-1, as detailed below:

in response to that the node M sends a request to send (RTS) packet to the node M-1 within a time slice *t*_{*j*+1}, where the RTS packet carries a time slot status table of the node complying with following rules:
a time slice *t*_{*j+*2} is set to a receiving state for receiving the SD data, and another time slice *t*_{*j+*3} is set to a sending state for sending the SD data;
in response to receiving the RTS data packet within the time slice *t*_{*j+*2}, the node M-1 learns a time slot arrangement of the node M based on the RTS data packet; in response to that a time slot arrangement of the node M-1 does not conflict with the time slot arrangement of the node M, data returns to a clear to send (CTS) packet; and in response to that the time slot arrangement of the node M-1 conflicts with the time slot arrangement of the node M, the data returns to the RTS packet; and
in response to the node M transmits the SD data to the node M-1 within the time slice *t*_{*j+*3} according to a time schedule, the node M-1 receives the SD data, and a collection of network node data is completed.

As a preferred embodiment of the edge computing-based intelligent multi-node online monitoring method of the present application, where: the performing data processing and analysis on the acquired data based on the edge computing method is to process various terminal monitoring data and transmit the data securely through the edge computing method, so as to realize a maintenance of a monitoring network state and a stable connection of a power system, the maintenance of the monitoring network state and the stable connection of the power system is achieved by calculating a minimized average task completion delay of power system service resources under delay requirements, and a calculation of the minimized average task completion delay of power system service resources under delay requirements includes an allocation of power system service resources and the minimized average task completion delay of tasks after allocation under delay requirements, and
the allocation of power system service resources is realized through a particle swarm algorithm performing allocation calculation by dividing service resources into particles, with a specific implementation formulas as follows:
   ${S}^{l} = \left({s}_{1}^{l},{s}_{2}^{l},…,{s}_{D}^{l}\right)$
   ${PS}_{bett}^{l} = \left({p}_{1}^{′},{p}_{2}^{′},…,{p}_{b}^{′}\right)$
   ${GS}_{best} = \left({g}_{1},{g}_{2},…,{g}_{D}\right)$
   $\begin{matrix}{S}^{l} \left(t\right) = \left({R}^{l}\left(t\right),{Z}^{l}\left(t\right)\right) \\ = \left({r}_{11}^{l}\left(t\right),{r}_{12}^{l}\left(t\right),…,,{r}_{N 1}^{l}\left(t\right),{r}_{N 2}^{l}\left(t\right),{z}_{11}^{t}\left(t\right),{z}_{12}^{l}\left(t\right),…,{z}_{\left.ψt+N\right|}^{t}\left(t\right)\right)\end{matrix}$
where *Y* represents a particle population size, i.e., a size of the power system service resources; *S^{l}* represents a D-dimensional position vector of an i-th particle; ${PS}_{bett}^{l}$ represents an optimal position searched by an *l*-th particle so far; *GS_{best}* represents a global optimal value of an optimal position searched by an entire particle swarm so far; ${r}_{i 1}^{l} \left(t\right)$ and ${r}_{i 2}^{l} \left(t\right)$ represent two cooperative nodes selected by the *i-*th terminal node; and ${z}_{ji}^{l} \left(t\right)$ represents that a *j*-th subtask of the *i*-th terminal node is executed on ${r}_{{r}_{10}}^{l} \left(t\right)$*.*

As a preferred embodiment of the edge computing-based intelligent multi-node online monitoring method of the present application, the allocation of power system service resources is realized by evaluating a particle quality of the particle swarm algorithm through a Fitness function, with a specific implementation formula as follows: $Fitness \left(S\right) = \frac{1}{\left(1-γ\right) \overline{T} \left(S\right) + γG \left(S\right)}$${S}^{l} \left(t+1\right) = Mutate \left(c,Cross\left(c,Cross\left(c,{S}^{l}\left(t\right),{PS}_{best}^{l}\right),{GS}_{best}\right)\right)$
where *G*(*S*) represents a sum of calculation resource constraint violation degrees of all edge nodes and satisfies *G(S) >* 0; *γ* ∈ (0,1) represents a constraint violation factor; *T(S)* represents a constraint target; *Cross*() and *Mutate*() represent a crossover operation and a mutation operation respectively; ${PS}_{bett}^{l}$ represents the optimal position searched by the *l*-th particle so far; *GS_{best}* represents the global optimal value of the optimal position searched by the entire particle swarm so far; and *c* represents a data propagation delay of a wired channel.

As a preferred embodiment of the edge computing-based intelligent multi-node online monitoring method of the present application, the calculation of the minimized average task completion delay of tasks after allocation under delay requirements is implemented by calculating a transmission delay of monitoring data between two cooperative points, with a specific calculation process as follows:
in response to that there are *N* terminal nodes *UE* and *M* edge nodes *EN* in the network, and the terminal nodes *UE* and edge nodes *EN* belong to sets *N =* {1,2,3,...,*N*} and *M* = {1,2,3,...,*M*} respectively, ${\sum }_{k ∈ M} {x}_{ijk} = 1$
*k ∈ Rᵢ,* ∀*xᵢⱼₖ =* 1 ${Sum}_{R , X , k}^{comp} = {\sum }_{i ∈ N} {\sum }_{j ∈ {T}_{i}} {c}_{ij} {x}_{ijk} \leq {C}_{k} , k ∈ M$
   ${Sum}_{R , X , k}^{soo} = {\sum }_{i ∈ N} {\sum }_{j ∈ {T}_{i}} {e}_{ij} {x}_{ijk} \leq {E}_{k} , k ∈ M$
   ${ν}_{i} = \frac{{B}_{{u}_{i}}}{\left|{N}_{{u}_{i}}\right|} {log}_{2} \left(1+{y}_{i}\right)$
   ${y}_{i} = \frac{{p}_{h} {h}_{{iu}_{4}}}{{σ}^{2}}$
   ${T}_{i , {u}_{i}}^{up} = \frac{{\sum }_{j ∈ {T}_{i}} {d}_{ij}}{{ν}_{i}} + \frac{{D}_{i , {u}_{i}}}{c} ,$
where *xᵢⱼₖ*, ${Sum}_{R , X , k}^{comp}$, and ${Sum}_{R , X , k}^{soo}$ represent constraint conditions for data transmission between cooperative points; *vᵢ* represents a data transmission rate; *cᵢⱼ* represents a calculation resource requirement; *dᵢⱼ* represents an input data volume; *eᵢⱼ* represents a storage resource requirement; *Cₖ* represents a data of a virtual computing unit; *yᵢ* represents a signal-to-noise ratio of two data access points; *Pₕ* represents a transmission power of a data access point; *h_{iuᵢ}* represents a channel gain of two data access points; *σ*² represents an additive white Gaussian noise power; *D_{i,uᵢ}* represents a physical distance between two data access points; *c* represents the data propagation delay of the wired channel; and ${T}_{i , {u}_{i}}^{up}$ represents a transmission delay of monitoring data between two cooperative points.

As a preferred embodiment of the edge computing-based intelligent multi-node online monitoring method of the present application, the performing online monitoring of intelligent nodes through the principle of magnetic induction is implemented by analyzing a working principle of an energy harvesting coil via a self-inductance model, establishing an equivalent circuit model of the energy harvesting coil, deriving an expression for an output power of the energy harvesting coil in a linear state, establishing a relationship between output power, primary current, secondary turns and magnetic core, and analyzing a variation trend of the output power of the energy harvesting coil in a saturated state, so as to realize the online monitoring of intelligent nodes, and
the principle of magnetic induction includes a coil equivalent model and an energy harvesting coil equivalent circuit; the coil equivalent model includes a primary winding and a secondary winding, and both the primary winding and the secondary winding are wound on a same magnetic core and maintain a coupling relationship between two coils, as detailed below:
in response to that the two coils are wound on the same magnetic core, a number of turns of the primary winding of the coil is *N₁,* a number of turns of the secondary winding is *N*₂, the secondary winding is open-circuited, and the secondary winding has no effect on a magnetic flux in the primary winding; and
in response to that a sinusoidal current *I*₁₀ passes through the primary winding, a magnetic flux *ϕ*₁₀ generated by the sinusoidal current in the magnetic core is linked with *N*₁ turns of a coil, and:
   ${φ}_{10} = {N}_{1} {ϕ}_{10}$
   ${ϕ}_{10} = BS$
where *φ*₁₀ represents the magnetic flux; *B* represents a magnetic induction intensity in the magnetic core; *S* represents a cross-sectional area of the magnetic core; and a magnetic field intensity *H* in a magnetic core magnetic circuit *l* is uniform everywhere, and according to a full current law:
   $∮ Hdl = Hl = {N}_{1} {I}_{10}$
   ${L}_{1} = \frac{{Ψ}_{10}}{{I}_{10}} = \frac{{N}_{1} BS}{\frac{Hl}{{N}_{1}}} = \frac{{N}_{1}^{2} mS}{l} = \frac{{N}_{1}^{2}}{{R}_{m}}$
   ${R}_{m} = \frac{l}{mS}$
   ${L}_{2} = \frac{{N}_{2}^{2}}{{R}_{m}}$
   ${L}_{s 10} = \frac{{Φ}_{s 10}}{{I}_{10}}$
where *Rₘ* is a magnetic reluctance of the magnetic core; *m* is a magnetic permeability of the magnetic core; *I*₁₀ represents the sinusoidal current in the primary winding; *L*_{*s*10} represents a leakage inductance, i.e., a ratio of leakage flux to primary current; *L*₁ represents a self-inductance of the primary winding; *L*₂ represents a self-inductance of the secondary winding; and *l* represents the magnetic core magnetic circuit.

As a preferred embodiment of the edge computing-based intelligent multi-node online monitoring method of the present application, the establishing the equivalent circuit model of the energy harvesting coil is implemented by fully linking equivalent circuits of the two windings and satisfying a complete coupling relationship, as detailed below:
in response to that a load resistance *R* is connected to a secondary side of the energy harvesting coil, an excitation signal is applied to both ends of the primary winding, a current *I*₁ flows through the primary winding, a mutual inductance between the two coils is *M,* and a current *I₂* flows through the secondary winding, ${\dot{U}}_{1} = {\dot{I}}_{1} {Z}_{x 1} + {\dot{U}}_{L 1}$ ${\dot{U}}_{2} = {\dot{I}}_{2} {Z}_{x 2} + {\dot{U}}_{L 2}$ ${\dot{U}}_{L 1} = {\dot{I}}_{1} {jwL}_{1} + {\dot{I}}_{2} jwM$
   ${I}_{2} \left({jwL}_{2}+{Z}_{x 2}+R\right) + {\dot{I}}_{1} jwM = 0$
where *L*_{*s*1} represents a leakage inductance of the primary winding; *L*_{*s*2} represents a leakage inductance of the secondary winding; *r*₁ represents an internal resistance of the secondary winding; *U̇*₁ represents an input voltage of the primary winding;*U̇*₂ represents a voltage across a load resistance of the secondary winding; *U̇*_{*L*1} represents a voltage across a self-inductance of the primary winding; *U*_{*L*2} represents a voltage across a self-inductance of the secondary winding;
in response to that a leakage impedance of the primary winding satisfies: *Z*_{*s*1} = *r₁ + jwL*_{*s*1} and a leakage impedance of the secondary winding satisfies: *Z*_{*s*2} = *r₂* + *jwL*_{*s*2}, it is indicated that the magnetic core passes through both the primary winding and the secondary winding, and: $M = \sqrt{{L}_{1} {L}_{2}} = \frac{{N}_{1} {N}_{2}}{{R}_{m}}$ ${\dot{I}}_{1} = - \frac{{I}_{2} \left({jwL}_{2}\dot{+}{Z}_{s 2}+R\right)}{jwM}$ ${\dot{U}}_{L 1} = - {\dot{I}}_{2} \left({Z}_{s 2}+R\right) \frac{{N}_{1}}{{N}_{2}}$ $\frac{{\dot{U}}_{L 1}}{{\dot{U}}_{L 2}} = \frac{{N}_{1}}{{N}_{2}}$ ${\dot{I}}_{2} = - \frac{{\dot{U}}_{L 2}}{{Z}_{s 2} + R} = - \frac{{N}_{2}}{{N}_{1}} ⋅ \frac{{\dot{U}}_{L 1}}{{Z}_{s 2} + R}$ ${\dot{I}}_{1} = \frac{{\dot{U}}_{L 1}}{{jwL}_{1}} + \frac{{\dot{U}}_{L 1}}{{\left(\frac{{N}_{1}}{{N}_{2}}\right)}^{2} \left(R+{Z}_{y 2}\right)}$
   $P = {I}_{0} {wL}_{1} {I}_{2}^{′} = \frac{mSw}{2 I} {I}_{1}^{2} sin 2 q$
where *M* represents the mutual inductance between the two coils; *İ₁* represents an equivalent current passing through the primary side; *İ₂* represents an equivalent current passing through the secondary side; *U̇*_{*L*1} represents the voltage across the self-inductance of the primary winding; *U̇*_{*L*2} represents the voltage across the self-inductance of the secondary winding; *P* represents an output power of the energy harvesting coil; *q* represents an included angle of equivalent currents; *S* represents the cross-sectional area of the magnetic core; and *R* represents a resistance value of the load resistance.

Another object of the present application is to provide an edge computing-based intelligent multi-node online monitoring system, which can realize accurate monitoring of node states in the intelligent node online monitoring module by adopting the principle of magnetic induction. Through the comprehensive application of the sensor data acquisition module, the edge computing and data processing and analysis module, and the intelligent node online monitoring module, the collaborative intelligent online monitoring of multi-nodes is realized.

As a preferred embodiment of the edge computing-based intelligent multi-node online monitoring system of the present application, the system includes a data acquisition module, an edge computing and data processing and analysis module, and an intelligent node online monitoring module; the data acquisition module is configured to collect data from network nodes; the edge computing and data processing module is configured to process and analyze the collected data through edge computing technology; the intelligent node online monitoring module is configured to perform online monitoring of intelligent nodes.

A computer device, including a memory and a processor, where the memory stores a computer program, the processor implements the steps of the edge computing-based intelligent multi-node online monitoring method when executing the computer program.

A computer-readable storage medium storing a computer program, where the computer program implements the steps of the edge computing-based intelligent multi-node online monitoring method when executed by a processor.

The present application can accurately and stably acquire network node data through an efficient sensor data acquisition module. By adopting edge computing technology, the present application reduces data transmission delay and improves the real-time performance of monitoring. By adopting the principle of magnetic induction, accurate monitoring of node states is realized in the intelligent node online monitoring module. Through the comprehensive application of the sensor data acquisition module, the edge computing and data processing and analysis module, and the intelligent node online monitoring module, the collaborative intelligent online monitoring of multi-nodes is realized.

### BRIEF DESCRIPTION OF THE DRAWINGS

To more clearly illustrate the technical solutions of the embodiments of the present application, the accompanying drawings required for the description of the embodiments will be briefly introduced below. Obviously, the drawings in the following description are only some embodiments of the present application, and those skilled in the art can also obtain other drawings according to these drawings without creative efforts.
FIG. 1 is a schematic structural diagram of an overall method step of an edge computing-based intelligent multi-node online monitoring method of the present application.
FIG. 2 is an equivalent circuit diagram of a primary winding of the edge computing-based intelligent multi-node online monitoring method of the present application.
FIG. 3 is an equivalent circuit diagram of an energy harvesting coil of the edge computing-based intelligent multi-node online monitoring method of the present application.
FIG. 4 is a schematic structural diagram of an overall composition of an edge computing-based intelligent multi-node online monitoring system of the present application.

### DETAILED DESCRIPTION OF THE EMBODIMENTS

To make the above objectives, features and advantages of the present application more obvious and understandable, the specific embodiments of the present application will be described in detail below with reference to the specification drawings. Obviously, the described embodiments are part of the embodiments of the present application, not all of the embodiments. Based on the embodiments of the present application, all other embodiments obtained by those skilled in the art without creative efforts shall fall within the scope of the present application.

In the following description, many specific details are set forth to facilitate a thorough understanding of the present application, but the present application can also be implemented in other ways different from those described herein, and those skilled in the art can make similar promotion without violating the connotation of the present application, so the present application is not limited by the specific embodiments disclosed below.

The references to "one embodiment" or "an embodiment" herein refer to specific features, structures or characteristics that may be included in at least one implementation of the present application. The appearances of the phrase "in one embodiment" in various places in the specification are not necessarily all referring to the same embodiment, nor are separate or alternative embodiments mutually exclusive of other embodiments.

The present application will be described in detail with reference to the schematic diagrams. When describing the embodiments of the present application in detail, for convenience of explanation, the cross-sectional view showing the device structure will be partially enlarged not in accordance with the general scale, and the schematic diagram is only an example, which should not limit the scope of the present application. In addition, the actual production should include three-dimensional dimensions of length, width and depth.

Meanwhile, in the description of the present application, it should be noted that the orientation or positional relationship indicated by the terms "upper, lower, inner and outer" is based on the orientation or positional relationship shown in the drawings, which is only for the convenience of describing the present application and simplifying the description, rather than indicating or implying that the referred device or element must have a specific orientation, be constructed and operated in a specific orientation, and therefore should not be construed as a limitation of the present application. In addition, the terms "first, second or third" are for descriptive purposes only and should not be construed as indicating or implying relative importance.

In the present application, unless otherwise clearly specified and limited, the terms "installation, communication, connection" should be understood in a broad sense. For example: it can be a fixed connection, a detachable connection or an integrated connection; it can also be a mechanical connection, an electrical connection or a direct connection; it can also be an indirect connection through an intermediate medium, or it can be the internal communication of two elements. For those skilled in the art, the specific meaning of the above terms in the present application can be understood according to specific circumstances.

### First embodiment

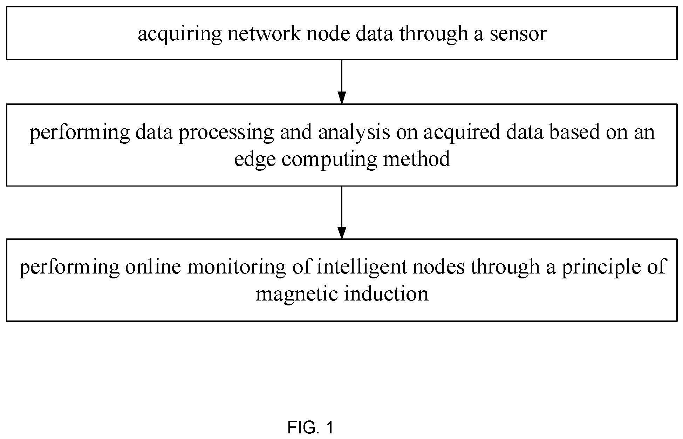

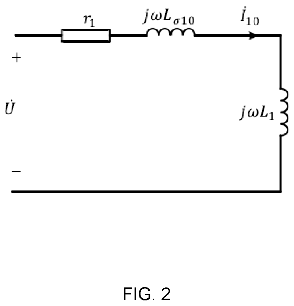

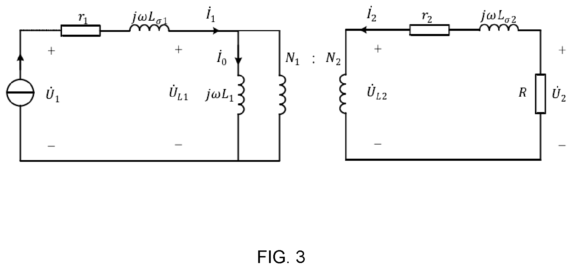

Referring to FIGS. 1 to 3, a first embodiment of the present application provides an edge computing-based intelligent multi-node online monitoring method, including the following steps:
S1, acquiring network node data through a sensor.

Specifically, the acquiring network node data through the sensor is implemented by reading sensor data (SD) from a tail node M of a power line and establishing communication with a node M-1, as detailed below:
in response to that the node M sends a request to send (RTS) packet to the node M-1 within a time slice *t*_{*j+*1}, where the RTS packet carries a time slot status table of the node complying with following rules:
a time slice *tⱼ₊₂* is set to a receiving state for receiving the SD data, and another time slice *tⱼ₊₃* is set to a sending state for sending the SD data;
in response to receiving the RTS data packet within the time slice *tⱼ₊₂,* the node M-1 learns a time slot arrangement of the node M based on the RTS data packet; in response to that a time slot arrangement of the node M-1 does not conflict with the time slot arrangement of the node M, data returns to a clear to send (CTS) packet; and in response to that the time slot arrangement of the node M-1 conflicts with the time slot arrangement of the node M, the data returns to the RTS packet; and
in response to the node M transmits the SD data to the node M-1 within the time slice *t*_{*j+*3} according to a time schedule, the node M-1 receives the SD data, and a collection of network node data is completed.

S2, performing data processing and analysis on acquired data based on an edge computing method.

Specifically, the performing data processing and analysis on the acquired data based on the edge computing method is to process various terminal monitoring data and transmit the data securely through the edge computing method, so as to realize a maintenance of a monitoring network state and a stable connection of a power system. The maintenance of the monitoring network state and the stable connection of the power system is achieved by calculating a minimized average task completion delay of power system service resources under delay requirements, and a calculation of the minimized average task completion delay of power system service resources under delay requirements includes an allocation of power system service resources and the minimized average task completion delay of tasks after allocation under delay requirements.

Further, the allocation of power system service resources is realized through a particle swarm algorithm performing allocation calculation by dividing service resources into particles, with a specific implementation formulas as follows:
${S}^{l} = \left({s}_{1}^{l},{s}_{2}^{l},…,{s}_{D}^{l}\right)$
${PS}_{bett}^{l} = \left({p}_{1}^{′},{p}_{2}^{′},…,{p}_{b}^{′}\right)$
${GS}_{best} = \left({g}_{1},{g}_{2},…,{g}_{D}\right)$
$\begin{matrix}{S}^{l} \left(t\right) = \left({R}^{l}\left(t\right),{Z}^{l}\left(t\right)\right) \\ = \left({r}_{11}^{l}\left(t\right),{r}_{12}^{l}\left(t\right),…,,{r}_{N 1}^{l}\left(t\right),{r}_{N 2}^{l}\left(t\right),{z}_{11}^{t}\left(t\right),{z}_{12}^{l}\left(t\right),…,{z}_{\left.ψt+N\right|}^{t}\left(t\right)\right)\end{matrix}$
where *Y* represents a particle population size, i.e., a size of the power system service resources; *S^{l}* represents a D-dimensional position vector of an i-th particle; ${PS}_{bett}^{l}$ represents an optimal position searched by an *l*-th particle so far; *GS_{best}* represents a global optimal value of an optimal position searched by an entire particle swarm so far; ${r}_{i 1}^{l} \left(t\right)$ and ${r}_{i 2}^{l} \left(t\right)$ represent two cooperative nodes selected by the *i*-th terminal node; and ${z}_{ji}^{l} \left(t\right)$ represents that a *j*-th subtask of the *i*-th terminal node is executed on ${r}_{{r}_{10}}^{l} \left(t\right)$*.*

Furthermore, the allocation of power system service resources is realized by evaluating a particle quality of the particle swarm algorithm through a Fitness function, with a specific implementation formula as follows:
$Fitness \left(S\right) = \frac{1}{\left(1-γ\right) \overline{T} \left(S\right) + γG \left(S\right)}$
${S}^{l} \left(t+1\right) = Mutate \left(c,Cross\left(c,Cross\left(c,{S}^{l}\left(t\right),{PS}_{best}^{l}\right),{GS}_{best}\right)\right) ,$
where *G*(*S*) represents a sum of calculation resource constraint violation degrees of all edge nodes and satisfies *G(S) >* 0; *γ ∈* (0,1) represents a constraint violation factor; *T̅(S)* represents a constraint target; *Cross()* and *Mutate()* represent a crossover operation and a mutation operation respectively; ${PS}_{bett}^{l}$ represents the optimal position searched by the *l*-th particle so far; *GS_{best}* represents the global optimal value of the optimal position searched by the entire particle swarm so far; and *c* represents a data propagation delay of a wired channel.

Further, the minimized average task completion delay of tasks after allocation under delay requirements is implemented by calculating a transmission delay of monitoring data between two cooperative points, with a specific calculation process as follows:
in response to that there are *N* terminal nodes *UE* and *M* edge nodes *EN* in the network, and the terminal nodes *UE* and edge nodes *EN* belong to sets *N* = {1,2,3,...,*N*} and *M* = {1,2,3,...,*M*} respectively, ${\sum }_{k ∈ M} {x}_{ijk} = 1$
*k ∈ Rᵢ,* ∀*xᵢⱼₖ =* 1 ${Sum}_{R , X , k}^{comp} = {\sum }_{i ∈ N} {\sum }_{j ∈ {T}_{i}} {c}_{ij} {x}_{ijk} \leq {C}_{k} , k ∈ M$
   ${Sum}_{R , X , k}^{soo} = {\sum }_{i ∈ N} {\sum }_{j ∈ {T}_{i}} {e}_{ij} {x}_{ijk} \leq {E}_{k} , k ∈ M$
   ${ν}_{i} = \frac{{B}_{{u}_{i}}}{\left|{N}_{{u}_{i}}\right|} {log}_{2} \left(1+{y}_{i}\right)$
   ${y}_{i} = \frac{{p}_{h} {h}_{i {u}_{4}}}{{σ}^{2}}$
   ${T}_{i , {u}_{i}}^{up} = \frac{{\sum }_{j ∈ {T}_{i}} {d}_{ij}}{{ν}_{i}} + \frac{{D}_{i , {u}_{i}}}{c} ,$
where *xᵢⱼₖ*, ${Sum}_{R , X , k}^{comp}$*,* and ${Sum}_{R , X , k}^{soo}$ represent constraint conditions for data transmission between cooperative points; *vᵢ* represents a data transmission rate; *cᵢⱼ* represents a calculation resource requirement; *dᵢⱼ* represents an input data volume; *eᵢⱼ* represents a storage resource requirement; *Cₖ* represents a data of a virtual computing unit; *yᵢ* represents a signal-to-noise ratio of two data access points; *Pₕ* represents a transmission power of a data access point; *h_{iuᵢ}* represents a channel gain of two data access points; *σ²* represents an additive white Gaussian noise power; *D_{i,uᵢ}* represents a physical distance between two data access points; *c* represents the data propagation delay of the wired channel; and ${T}_{i , {u}_{i}}^{up}$ represents a transmission delay of monitoring data between two cooperative points.

S3, performing online monitoring of intelligent nodes through a principle of magnetic induction.

Specifically, the performing online monitoring of intelligent nodes through the principle of magnetic induction is implemented by analyzing a working principle of an energy harvesting coil via a self-inductance model, establishing an equivalent circuit model of the energy harvesting coil, deriving an expression for an output power of the energy harvesting coil in a linear state, establishing a relationship between output power, primary current, secondary turns and magnetic core, and analyzing a variation trend of the output power of the energy harvesting coil in a saturated state, so as to realize the online monitoring of intelligent nodes.

Further, the principle of magnetic induction includes a coil equivalent model and an energy harvesting coil equivalent circuit; the coil equivalent model includes a primary winding and a secondary winding, and both the primary winding and the secondary winding are wound on a same magnetic core and maintain a coupling relationship between two coils, as detailed below:
in response to that the two coils are wound on the same magnetic core, a number of turns of the primary winding of the coil is *N₁,* a number of turns of the secondary winding is *N*₂, the secondary winding is open-circuited, and the secondary winding has no effect on a magnetic flux in the primary winding; and
in response to that a sinusoidal current *I*₁₀ passes through the primary winding, a magnetic flux *ϕ*₁₀ generated by the sinusoidal current in the magnetic core is linked with *N*₁ turns of a coil, and:
   ${φ}_{10} = {N}_{1} {ϕ}_{10}$
   ${ϕ}_{10} = BS$
where *φ*₁₀ represents the magnetic flux; *B* represents a magnetic induction intensity in the magnetic core; *S* represents a cross-sectional area of the magnetic core; and a magnetic field intensity *H* in a magnetic core magnetic circuit *l* is uniform everywhere, and according to a full current law:
   $∮ Hdl = Hl = {N}_{1} {I}_{10}$
   ${L}_{1} = \frac{{Ψ}_{10}}{{I}_{10}} = \frac{{N}_{1} BS}{\frac{Hl}{{N}_{1}}} = \frac{{N}_{1}^{2} mS}{l} = \frac{{N}_{1}^{2}}{{R}_{m}}$
   ${R}_{m} = \frac{l}{mS}$
   ${L}_{2} = \frac{{N}_{2}^{2}}{{R}_{m}}$
   ${L}_{s 10} = \frac{{Φ}_{s 10}}{{I}_{10}}$
where *Rₘ* is a magnetic reluctance of the magnetic core; *m* is a magnetic permeability of the magnetic core; *I*₁₀ represents the sinusoidal current in the primary winding; *L*_{*s*10} represents a leakage inductance, i.e., a ratio of leakage flux to primary current; *L*₁ represents a self-inductance of the primary winding; *L*₂ represents a self-inductance of the secondary winding; and *l* represents the magnetic core magnetic circuit.

Further, the establishing the equivalent circuit model of the energy harvesting coil is implemented by fully linking equivalent circuits of the two windings and satisfying a complete coupling relationship, as detailed below:
in response to that a load resistance *R* is connected to a secondary side of the energy harvesting coil, an excitation signal is applied to both ends of the primary winding, a current *I*₁ flows through the primary winding, a mutual inductance between the two coils is *M,* and a current *I₂* flows through the secondary winding, the following relations hold: ${\dot{U}}_{1} = {\dot{I}}_{1} {Z}_{s 1} + {\dot{U}}_{L 1}$ ${\dot{U}}_{2} = {\dot{I}}_{2} {Z}_{s 2} + {\dot{U}}_{L 2}$ ${\dot{U}}_{L 1} = {\dot{I}}_{1} {jwL}_{1} + {\dot{I}}_{2} jwM$
   ${I}_{2} \left({jwL}_{2}+{Z}_{z 2}+R\right) + {I}_{1} jwM = 0$
where *Lₛ₁* represents a leakage inductance of the primary winding; *L*ₛ₂ represents a leakage inductance of the secondary winding; *r*₁ represents an internal resistance of the secondary winding; *U̇*₁ represents an input voltage of the primary winding; *U̇*₂ represents a voltage across a load resistance of the secondary winding; *U̇_{L1}* represents a voltage across a self-inductance of the primary winding; *U̇_{L2}* represents a voltage across a self-inductance of the secondary winding;
in response to that a leakage impedance of the primary winding satisfies: *Z*_{*s*1} = *r*₁ *+ jwL*_{*s*1} and a leakage impedance of the secondary winding satisfies: *Z*_{*s*2} = *r₂* + *jwL*_{*s*2}, it is indicated that the magnetic core passes through both the primary winding and the secondary winding, and: $M = \sqrt{{L}_{1} {L}_{2}} = \frac{{N}_{1} {N}_{2}}{{R}_{m}}$ ${\dot{I}}_{1} = - \frac{{I}_{2} \left({jwL}_{2}+{Z}_{s 2}+R\right)}{jwM}$ ${\dot{U}}_{L 1} = - {\dot{I}}_{2} \left({Z}_{s 2}+R\right) \frac{{N}_{1}}{{N}_{2}}$ $\frac{{\dot{U}}_{L 1}}{{\dot{U}}_{L 2}} = \frac{{N}_{1}}{{N}_{2}}$ ${\dot{I}}_{2} = - \frac{{\dot{U}}_{L 2}}{{Z}_{s 2} + R} = - \frac{{N}_{2}}{{N}_{1}} ⋅ \frac{{\dot{U}}_{L 1}}{{Z}_{s 2} + R}$ ${\dot{I}}_{1} = \frac{{\dot{U}}_{L 1}}{{jwL}_{1}} + \frac{{\dot{U}}_{L 1}}{{\left(\frac{{N}_{1}}{{N}_{2}}\right)}^{2} \left(R+{Z}_{z 2}\right)}$
   $P = {I}_{0} {wL}_{1} {I}_{2}^{′} = \frac{mSw}{2 I} {I}_{1}^{2} sin 2 q$
where *M* represents the mutual inductance between the two coils; *İ₁* represents an equivalent current passing through the primary side; *İ₂* represents an equivalent current passing through the secondary side; *U̇_{L1}* represents the voltage across the self-inductance of the primary winding; *U̇_{L2}* represents the voltage across the self-inductance of the secondary winding; *P* represents an output power of the energy harvesting coil; *q* represents an included angle of equivalent currents; *S* represents the cross-sectional area of the magnetic core; and *R* represents a resistance value of the load resistance

### Second embodiment

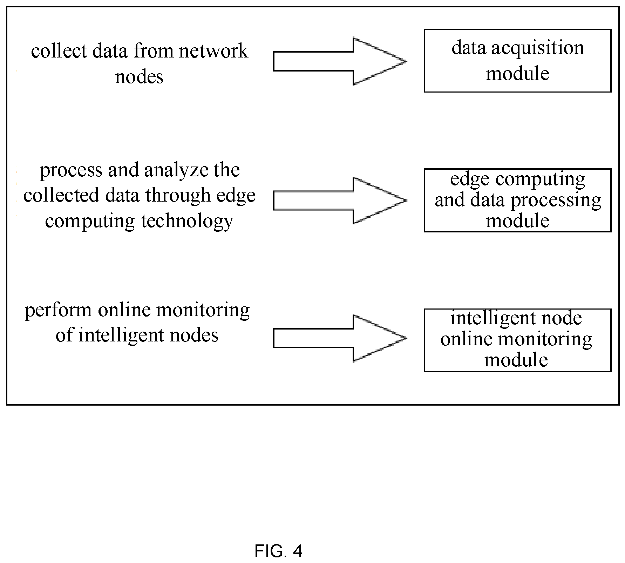

Referring to FIG. 4, a second embodiment of the present application provides an edge computing-based intelligent multi-node online monitoring system, including a data acquisition module, an edge computing and data processing and analysis module, and an intelligent node online monitoring module.

Specifically, the data acquisition module is configured to collect data from network nodes; the edge computing and data processing module is configured to process and analyze the collected data through edge computing technology; the intelligent node online monitoring module is configured to perform online monitoring of intelligent nodes.

Further, to reflect the beneficial effects of the present application, the technical features of the present application are compared with those of the prior art, and the specific comparison results are shown in the following table:

| comparison dimension | technical features of the present application | prior art |
|---|---|---|
| data collection capability | supports multiple sensor types and collects environmental data comprehensively | limited to a few sensor types with great data limitations |
| data quality control | monitors and corrects data in real time to ensure data accuracy | generally limited; data may be affected by interference or errors |
| real-time analysis and decision-making | detects anomalies in real time and makes corresponding decisions | relatively slow processing speed, which may fail to meet real-time requirements |
| health status assessment | regularly evaluates the health status of intelligent nodes | generally pays little attention to the long-term performance and health status of nodes |
| security assessment | detects network attacks and data breaches | limited security assessment; the system is vulnerable to network attacks |

It is not difficult to find from the above comparison table that after adopting the present application, compared with the prior art, the present application has advantages in data collection capability, data quality control, real-time analysis and decision-making, health status assessment and security assessment, and can improve the performance and reliability of the multi-node online monitoring system.

Furthermore, if the functions are implemented in the form of software functional units and sold or used as independent products, they can be stored in a computer-readable storage medium. Based on this understanding, the technical solution of the present application essentially or the part contributing to the prior art or part of the technical solution can be embodied in the form of a software product. The computer software product is stored in a storage medium and includes several instructions to enable a computer device (which may be a personal computer, a server, or a network device, etc.) to execute all or part of the steps of the method described in each embodiment of the present application. The storage medium includes: U disk, mobile hard disk, read-only memory (ROM), random access memory (RAM), magnetic disk or optical disk and other media that can store program codes.

The logic and/or steps represented in the flowcharts or otherwise described herein, for example, can be considered as an ordered list of executable instructions for implementing logical functions, and can be specifically embodied in any computer-readable medium for use by or in connection with an instruction execution system, apparatus, or device (such as a computer-based system, a system including a processor, or other system that can fetch instructions from an instruction execution system, apparatus, or device and execute instructions). For this specification, a "computer-readable medium" can be any apparatus that can contain, store, communicate, propagate, or transport the program for use by or in connection with the instruction execution system, apparatus, or device.

More specific examples (non-exhaustive list) of computer-readable media include the following: an electrical connection (electronic device) having one or more wires, a portable computer diskette (magnetic device), a random access memory (RAM), a read-only memory (ROM), an erasable programmable read-only memory (EPROM or flash memory), an optical fiber device, and a portable compact disk read-only memory (CDROM). In addition, the computer-readable medium can even be paper or another suitable medium on which the program can be printed, because the program can be electronically obtained, for example, by scanning the paper or other medium, then editing, interpreting or otherwise processing in a suitable manner if necessary, and then stored in the computer memory.

In addition, to provide a concise description of the exemplary embodiments, not all features of the actual implementation (i.e., those not related to the best mode currently considered for carrying out the present application, or those not related to carrying out the present application) may be described.

It should be understood that during the development of any actual implementation, such as in any engineering or design project, many specific implementation decisions can be made. Such development efforts may be complex and time-consuming, but for those skilled in the art benefiting from this disclosure, the development efforts will be routine work of design, manufacture and production without excessive experimentation.

It should be noted that the above embodiments are only used to illustrate the technical solutions of the present application rather than limit them. Although the present application is described in detail with reference to the preferred embodiments, those skilled in the art should understand that modifications or equivalent replacements can be made to the technical solutions of the present application without departing from the spirit and scope of the technical solutions of the present application, and all such modifications and equivalent replacements shall fall within the scope of the claims of the present application.

## Claims

1. An edge computing-based intelligent multi-node online monitoring method, **characterized by** comprising following steps:
acquiring network node data through a sensor;
performing data processing and analysis on acquired data based on an edge computing method; and
performing online monitoring of intelligent nodes through a principle of magnetic induction.

2. The edge computing-based intelligent multi-node online monitoring method according to claim 1, wherein the acquiring network node data through the sensor is implemented by reading sensor data (SD) from a tail node M of a power line and establishing communication with a node M-1, as detailed below:
in response to that the node M sends a request to send (RTS) packet to the node M-1 within a time slice *t*_{*j+*1}, the RTS packet carries a time slot status table of the node complying with following rules:
a time slice *t*_{*j+*2} is set to a receiving state for receiving the SD data, and another time slice *t*_{*j+*3} is set to a sending state for sending the SD data;
in response to receiving the RTS data packet within the time slice *t*_{*j+*2}, the node M-1 learns a time slot arrangement of the node M based on the RTS data packet; in response to that a time slot arrangement of the node M-1 does not conflict with the time slot arrangement of the node M, data returns to a clear to send (CTS) packet; and in response to that the time slot arrangement of the node M-1 conflicts with the time slot arrangement of the node M, the data returns to the RTS packet; and
in response to the node M transmits the SD data to the node M-1 within the time slice *t*_{*j+*3} according to a time schedule, the node M-1 receives the SD data, and a collection of network node data is completed.

3. The edge computing-based intelligent multi-node online monitoring method according to claim 2, wherein the performing data processing and analysis on the acquired data based on the edge computing method is to process various terminal monitoring data and transmit the data securely through the edge computing method, so as to realize a maintenance of a monitoring network state and a stable connection of a power system, the maintenance of the monitoring network state and the stable connection of the power system is achieved by calculating a minimized average task completion delay of power system service resources under delay requirements, and a calculation of the minimized average task completion delay of power system service resources under delay requirements comprises an allocation of power system service resources and the minimized average task completion delay of tasks after allocation under delay requirements, and
the allocation of power system service resources is realized through a particle swarm algorithm performing allocation calculation by dividing service resources into particles, with a specific implementation formulas as follows: ${S}^{l} = \left({s}_{1}^{l},{s}_{2}^{l},…,{s}_{D}^{l}\right)$ ${PS}_{bett}^{l} = \left({p}_{1}^{′},{p}_{2}^{′},…,{p}_{b}^{′}\right)$ ${GS}_{best} = \left({g}_{1},{g}_{2},…,{g}_{D}\right)$ $\begin{matrix}{S}^{l} \left(t\right) = \left({R}^{l}\left(t\right),{Z}^{l}\left(t\right)\right) \\ = \left({r}_{11}^{l}\left(t\right),{r}_{12}^{l}\left(t\right),…,,{r}_{N 1}^{l}\left(t\right),{r}_{N 2}^{l}\left(t\right),{z}_{11}^{t}\left(t\right),{z}_{12}^{l}\left(t\right),…,,{z}_{\left.ψt+N\right|}^{t}\left(t\right)\right)\end{matrix}$
wherein *Y* represents a particle population size, i.e., a size of the power system service resources; *S^{l}* represents a D-dimensional position vector of an i-th particle; ${PS}_{bett}^{l}$ represents an optimal position searched by an *l*-th particle so far; *GS_{best}* represents a global optimal value of an optimal position searched by an entire particle swarm so far; ${r}_{i 1}^{l} \left(t\right)$ and ${r}_{i 2}^{l} \left(t\right)$ represent two cooperative nodes selected by the *i*-th terminal node; and ${z}_{ji}^{l} \left(t\right)$ represents that a *j*-th subtask of the *i*-th terminal node is executed on ${r}_{{r}_{10}}^{l} \left(t\right)$*.*

4. The edge computing-based intelligent multi-node online monitoring method according to claim 3, wherein the allocation of power system service resources is realized by evaluating a particle quality of the particle swarm algorithm through a Fitness function, with a specific implementation formula as follows: $Fitness \left(S\right) = \frac{1}{\left(1-γ\right) \overline{T} \left(S\right) + γG \left(S\right)}$ ${S}^{l} \left(t+1\right) = Mutate \left(c,Cross\left(c,Cross\left(c,{S}^{l}\left(t\right),{PS}_{best}^{l}\right),{GS}_{best}\right)\right)$ wherein *G*(*S*) represents a sum of calculation resource constraint violation degrees of all edge nodes and satisfies *G(S) >* 0; *γ* ∈ (0,1) represents a constraint violation factor; *T̅(S)* represents a constraint target; *Cross()* and *Mutate()* represent a crossover operation and a mutation operation respectively; ${PS}_{bett}^{l}$ represents the optimal position searched by the *l*-th particle so far; *GS_{best}* represents the global optimal value of the optimal position searched by the entire particle swarm so far; and *c* represents a data propagation delay of a wired channel.

5. The edge computing-based intelligent multi-node online monitoring method according to claim 4, wherein the calculation of the minimized average task completion delay of tasks after allocation under delay requirements is implemented by calculating a transmission delay of monitoring data between two cooperative points, with a specific calculation process as follows:
in response to that there are *N* terminal nodes *UE* and *M* edge nodes *EN* in the network, and the terminal nodes *UE* and edge nodes *EN* belong to sets *N =* {1,2,3,...,N} and *M* = {1,2,3,...,M} respectively, ${\sum }_{k ∈ M} {x}_{ijk} = 1$ *k ∈ Rᵢ*, *∀xᵢⱼₖ =* 1 ${Sum}_{R , X , k}^{comp} = {\sum }_{i ∈ N} {\sum }_{j ∈ {T}_{i}} {c}_{ij} {x}_{ijk} \leq {C}_{k} , k ∈ M$ ${Sum}_{R , X , k}^{soo} = {\sum }_{i ∈ N} {\sum }_{j ∈ {T}_{i}} {e}_{ij} {x}_{ijk} \leq {E}_{k} , k ∈ M$ ${ν}_{i} = \frac{{B}_{{u}_{i}}}{\left|{N}_{{u}_{i}}\right|} {log}_{2} \left(1+{y}_{i}\right)$ ${y}_{i} = \frac{{p}_{h} {h}_{{iu}_{4}}}{{σ}^{2}}$ ${T}_{i , {u}_{i}}^{up} = \frac{{\sum }_{j ∈ {T}_{i}} {d}_{ij}}{{ν}_{i}} + \frac{{D}_{i , {u}_{i}}}{c} ,$
wherein *xᵢⱼₖ*, ${Sum}_{R , X , k}^{comp}$, and ${Sum}_{R , X , k}^{soo}$ represent constraint conditions for data transmission between cooperative points; *vᵢ* represents a data transmission rate; *cᵢⱼ* represents a calculation resource requirement; *dᵢⱼ* represents an input data volume; *eᵢⱼ* represents a storage resource requirement; *Cₖ* represents a data of a virtual computing unit; *yᵢ* represents a signal-to-noise ratio of two data access points; *Pₕ* represents a transmission power of a data access point; *h_{iuᵢ}* represents a channel gain of two data access points; *σ*² represents an additive white Gaussian noise power; *D_{i,uᵢ}* represents a physical distance between two data access points; *c* represents the data propagation delay of the wired channel; and ${T}_{i , {u}_{i}}^{up}$ represents a transmission delay of monitoring data between two cooperative points.

6. The edge computing-based intelligent multi-node online monitoring method according to claim 5, wherein the performing online monitoring of intelligent nodes through the principle of magnetic induction is implemented by analyzing a working principle of an energy harvesting coil via a self-inductance model, establishing an equivalent circuit model of the energy harvesting coil, deriving an expression for an output power of the energy harvesting coil in a linear state, establishing a relationship between output power, primary current, secondary turns and magnetic core, and analyzing a variation trend of the output power of the energy harvesting coil in a saturated state, so as to realize the online monitoring of intelligent nodes, and
the principle of magnetic induction comprises a coil equivalent model and an energy harvesting coil equivalent circuit; the coil equivalent model comprises a primary winding and a secondary winding, and both the primary winding and the secondary winding are wound on a same magnetic core and maintain a coupling relationship between two coils, as detailed below:
in response to that the two coils are wound on the same magnetic core, a number of turns of the primary winding of the coil is *N₁,* a number of turns of the secondary winding is N₂, the secondary winding is open-circuited, and the secondary winding has no effect on a magnetic flux in the primary winding; and
in response to that a sinusoidal current *I*₁₀ passes through the primary winding, a magnetic flux *ϕ*₁₀ generated by the sinusoidal current in the magnetic core is linked with *N*₁ turns of a coil, and: ${φ}_{10} = {N}_{1} {ϕ}_{10}$ ${ϕ}_{10} = BS$
wherein *φ*₁₀ represents the magnetic flux; *B* represents a magnetic induction intensity in the magnetic core; *S* represents a cross-sectional area of the magnetic core; and a magnetic field intensity *H* in a magnetic core magnetic circuit *l* is uniform everywhere, and according to a full current law: $∮ Hdl = Hl = {N}_{1} {I}_{10}$ ${L}_{1} = \frac{{Ψ}_{10}}{{I}_{10}} = \frac{{N}_{1} BS}{\frac{Hl}{{N}_{1}}} = \frac{{N}_{1}^{2} mS}{l} = \frac{{N}_{1}^{2}}{{R}_{m}}$ ${R}_{m} = \frac{l}{mS}$ ${L}_{2} = \frac{{N}_{2}^{2}}{{R}_{m}}$ ${L}_{s 10} = \frac{{Φ}_{s 10}}{{I}_{10}}$
wherein *Rₘ* is a magnetic reluctance of the magnetic core; *m* is a magnetic permeability of the magnetic core; *I*₁₀ represents the sinusoidal current in the primary winding; *Lₛ₁₀* represents a leakage inductance, i.e., a ratio of leakage flux to primary current; *L₁* represents a self-inductance of the primary winding; *L*₂ represents a self-inductance of the secondary winding; and *l* represents the magnetic core magnetic circuit.

7. The edge computing-based intelligent multi-node online monitoring method according to claim 6, wherein the establishing the equivalent circuit model of the energy harvesting coil is implemented by fully linking equivalent circuits of the two windings and satisfying a complete coupling relationship, as detailed below:
in response to that a load resistance *R* is connected to a secondary side of the energy harvesting coil, an excitation signal is applied to both ends of the primary winding, a current *I*₁ flows through the primary winding, a mutual inductance between the two coils is *M,* and a current *I₂* flows through the secondary winding, ${\dot{U}}_{1} = {\dot{I}}_{1} {Z}_{s 1} + {{U}_{L 1}}^{.}$ ${\dot{U}}_{2} = {\dot{I}}_{2} {Z}_{s 2} + {{U}_{L 2}}^{.}$ ${\dot{U}}_{L 1} = {\dot{I}}_{1} {jwL}_{1} + {\dot{I}}_{2} jwM$ ${I}_{2} \left({jwL}_{2}{+}^{.}{Z}_{s 2}+R\right) + {\dot{I}}_{1} jwM = 0$
wherein *L*_{*s*1} represents a leakage inductance of the primary winding; *L*ₛ₂ represents a leakage inductance of the secondary winding; *r*₁ represents an internal resistance of the secondary winding; *U̇*₁ represents an input voltage of the primary winding; *U*₂ represents a voltage across a load resistance of the secondary winding; *U̇_{L1}* represents a voltage across a self-inductance of the primary winding; *U̇*_{*L*2} represents a voltage across a self-inductance of the secondary winding;
in response to that a leakage impedance of the primary winding satisfies: *Z*ₛ₁ *= r*₁ + *jwLₛ₁* and a leakage impedance of the secondary winding satisfies:
*Z*_{*s*2} *= r₂* + *jwL*_{*s*2}, it is indicated that the magnetic core passes through both the primary winding and the secondary winding, and: $M = \sqrt{{L}_{1} {L}_{2}} = \frac{{N}_{1} {N}_{2}}{{R}_{m}}$ ${\dot{I}}_{I} = - \frac{{I}_{2} \left({jwL}_{2}+{\dot{Z}}_{s 2}+R\right)}{jwM}$ ${\dot{U}}_{L I} = - {\dot{I}}_{2} \left({Z}_{s 2}+R\right) \frac{{N}_{I}}{{N}_{2}}$ $\frac{{\dot{U}}_{L 1}}{{\dot{U}}_{L 2}} = \frac{{N}_{I}}{{N}_{2}}$ ${\dot{I}}_{2} = - \frac{{\dot{U}}_{I , 2}}{{Z}_{s 2} + R} = - \frac{{N}_{2}}{{N}_{1}} ⋅ \frac{{\dot{U}}_{L 1}}{{Z}_{s 2} + R}$ ${\dot{I}}_{1} = \frac{{\dot{U}}_{L 1}}{{jw}_{1}} + \frac{{\dot{U}}_{L 1}}{{\left(\frac{{N}_{1}}{{N}_{2}}\right)}^{2} \left(R+{Z}_{s 2}\right)}$ $P = {I}_{0} {wL}_{1} {I}_{2} = \frac{mSw}{2 l} {I}_{1}^{2} sin 2 q$
wherein *M* represents the mutual inductance between the two coils; *İ₁* represents an equivalent current passing through the primary side; *İ₂* represents an equivalent current passing through the secondary side; *U̇_{L1}* represents the voltage across the self-inductance of the primary winding; *U̇_{L2}* represents the voltage across the self-inductance of the secondary winding; *P* represents an output power of the energy harvesting coil; *q* represents an included angle of equivalent currents; *S* represents the cross-sectional area of the magnetic core; and *R* represents a resistance value of the load resistance.

8. A system adopting the edge computing-based intelligent multi-node online monitoring method according to any one of claims 1 to 7, **characterized by** comprising:
a data acquisition module, configured to collect data from network nodes;
an edge computing and data processing module, configured to process and analyze collected data through edge computing technology; and
an intelligent node online monitoring module, configured to perform online monitoring of intelligent nodes.

9. A computer device, **characterized by** comprising a memory and a processor, wherein the memory stores a computer program, and the processor implements the edge computing-based intelligent multi-node online monitoring method according to any one of claims 1 to 7 when executing the computer program.

10. A computer-readable storage medium, **characterized in that** the computer-readable storage medium stores a computer program, and the computer program implements the edge computing-based intelligent multi-node online monitoring method according to any one of claims 1 to 7 when executed by a processor.
